# EUROPÄISCHE PATENTSCHRIFT

(11) **EP 4 077 954 B1**
(45) Veröffentlichungstag und Bekanntmachung des Hinweises auf die Patenterteilung: **12.06.2024**
(21) Anmeldenummer: 20828829.0
(22) Anmeldetag: 17.12.2020
(51) Int. Cl.: F16B 23/00, B25B 15/00

(54) **SCHRAUBENANTRIEB**
SCREW DRIVE
ENTRAÎNEMENT DE VIS

(30) Priorität: 20.12.2019 AT 5024619 U
(43) Veröffentlichungstag der Anmeldung: 26.10.2022
(60) Teilanmeldung: 24169843.0
(73) Patentinhaber: Avvio GmbH & Co Kg, 8042 Graz (AT)
(72) Erfinder: HUBMANN, Gerhard, 8042 Graz (AT)
(74) Vertreter: Schwarz & Partner Patentanwälte GmbH
(86) Internationale Anmeldenummer: PCT/AT2020/060475
(87) Internationale Veröffentlichungsnummer: WO 2021/119708

(56) Entgegenhaltungen:
- EP-A2- 2 278 175
- DE-A1- 19 928 431
- FR-A7- 2 314 645
- US-A1- 2005 209 592
- US-A1- 2007 037 121
- US-A1- 2009 023 109

## Beschreibung

Die Erfindung betrifft ein Kit umfassend eine Schraube und einen Schraubenkopfantrieb.

Schraubenkopfbuchsen sind geometrische Strukturen, welche in Schraubenköpfen ausgeformt sind und zur drehfesten Aufnahme eines Schraubenkopfantriebs dienen. Mittels des Schraubenkopfantriebs kann ein Drehmoment auf die Schraube übertragen werden, um die Schraube in ein Material einzudrehen oder aus diesem auszudrehen. Im Stand der Technik sind eine Reihe an Geometrien für Schraubenkopfantriebe und Schraubenkopfbuchsen, wie beispielsweise Philipps-, Schlitz-, oder Torx-Geometrien bekannt. Diese Geometrien werden oft als Schraubenantriebe bezeichnet. Geometrien, wie beispielsweise die Torx-Geometrie, sind darauf optimiert, hohe Drehmomente von dem Schraubenkopfantrieb auf die Schraubenkopfbuchse zu übertragen.

Ein Nachteil vieler Schraubenantriebe besteht darin, dass bei einer unzureichend zentrierten, beziehungsweise bei einer verkanteten Ausrichtung des Schraubenkopfantriebs zur Schraubenkopfbuchse ein Formschluss zwischen dem Schraubenkopfantrieb und der Schraubenkopfbuchse nur unzureichend hergestellt wird, wodurch der Schraubenkopfantrieb in der Schraubenkopfbuchse durchrutschen kann. Hierdurch kann die Schraubenkopfbuchse und/oder der Schraubenkopfanrieb beschädigt werden, wodurch das notwendige Drehmoment zum Eindrehen oder Ausdrehen einer mit dem Schraubenkopfantrieb versehenen Schraube nicht mehr übertragen werden kann. Dies hat zur Folge, dass die betreffende Schraube nicht mehr eingedreht, oder mit einfachen Mitteln aus einem Material entfernt werden kann, wodurch ein Werkstück, in welches die Schraube eingedreht wurde, beschädigt, oder in seiner Funktion beeinträchtigt werden könnte.

Eine Geometrie zur verbesserten Ausrichtung eines Schraubenkopfantriebs in einer Schraubenkopfbuchse ist im Stand der Technik als TTAP Schraubenantrieb bekannt, und unter der US 6,951,158 B1 veröffentlicht. Die Schraubenkopfbuchse des TTAP Schraubenantriebs umfasst einen äußeren und einen inneren Abschnitt, wobei der innere Abschnitt einen Zentrierkonus umfasst. Hierdurch wird der Schraubenkopfantrieb zentral in der Schraubenkopfbuchse ausgerichtet. Das Dokument US 2007/037121 A1 zeigt ein Kit nach dem Stand der Technik.

Der vorliegenden Erfindung liegt die Aufgabe zugrunde, eine alternative Geometrie für Schraubenantriebe bereitzustellen, welche eine hohe Drehmomentübertragung gewährleistet, und zusätzlich eine Zentrierung des Schraubenkopfantriebs in der Schraubenkopfbuchse vorsieht.

Erfindungsgemäß wird diese Aufgabe durch ein Kit mit den Merkmalen von Anspruch 1 gelöst.

Die erfindungsgemäße Ausführung der Schraubenkopfbuchse für eine Schraube umfasst einen äußeren Abschnitt und einen auf den äußeren Abschnitt folgenden inneren Abschnitt. Der äußere Abschnitt weist in zumindest einer normal auf eine Tiefe der Schraubenkopfbuchse orientierten ersten Achse einen größeren Durchmesser als der innere Abschnitt auf und ist im Wesentlichen als ein, in Richtung des inneren Abschnitts zulaufender Kegelstumpf ausgebildet. Der innere Abschnitt ist als Eingriffsgeometrie zur drehfesten Aufnahme eines Schraubenkopfantriebs ausgebildet. Durch den kegelförmig zulaufenden äußeren Abschnitt wird eine Führung für einen Schraubenkopfantrieb bereitgestellt, wodurch verhindert wird, dass der Schraubenkopfantrieb schräg in die Schraubenkopfbuchse eingeführt wird. Darüber hinaus liegt der als Eingriffsgeometrie ausgeführte innere Abschnitt hinter dem, beziehungsweise in einer größeren Tiefe als der äußere Abschnitt, wodurch sichergestellt wird, dass der Schraubenkopfantrieb durch den äußeren Abschnitt zentriert ausgerichtet wird, bevor dieser in die Eingriffsgeometrie eingreift. Hierdurch wird ein Abnutzen der Eingriffsgeometrie durch unsachgemäß eingesetzte Schraubenkopfantriebe verhindert. Vorzugsweise umfasst der äußere Abschnitt einen gegenüber einem Zylindermantel im Bereich von 2,5° bis 10° geneigten Kegelstumpfmantel. Hierdurch wird der Vorteil erreicht, dass ein schräg aufgesetzter Schraubenkopfantrieb ohne großen Kraftaufwand zentriert ausgerichtet wird.

Des Weiteren umfasst die erfindungsgemäße Schraubenkopfbuchse gemäß der bevorzugten Ausführungsform einen zwischen dem äußeren Abschnitt und dem inneren Abschnitt angeordneten Einführbereich mit Einführflächen, wobei die Einführflächen eine Neigung von im Wesentlichen 10° gegenüber einer Grundfläche des Kegelstumpfs des äußeren Abschnitts aufweisen. Hierdurch wird ein Hineingleiten einer Angriffsgeometrie des Schraubenkopfantriebs in die Eingriffsgeometrie der Schraubenkopfbuchse erleichtert.

Die Eingriffsgeometrie der erfindungsgemäßen Schraubenkopfbuchse ist vorzugsweise eine Philipps-Geometrie, eine Torx-Geometrie oder eine Schlitz-Geometrie. Besonders bevorzugt ist die Eingriffsgeometrie eine die Schraubenkopfbuchse in einer normal auf die Tiefe der Schraubenkopfbuchse orientierten, von der ersten Achse verschiedenen zweiten Achse durchlaufende Schlitz-Geometrie. Hierdurch wird der Vorteil erreicht, dass eine Vielzahl unterschiedlicher Schraubenantriebsgeometrien im Rahmen der Erfindung eingesetzt werden können.

Die erfindungsgemäße Ausführung des Schraubenkopfantriebs umfasst einen äußeren Abschnitt und einen auf den äußeren Abschnitt folgenden inneren Abschnitt, wobei der innere Abschnitt in zumindest einer normal auf eine Höhe des Schraubenkopfantriebs orientierten ersten Achse einen größeren Durchmesser als der äußere Abschnitt aufweist. Der innere Abschnitt ist im Wesentlichen als ein in Richtung des äußeren Abschnitts zulaufender Kegelstumpf ausgebildet, und der äußere Abschnitt umfasst eine Angriffsgeometrie, welche dazu ausgebildet ist, in eine Eingriffsgeometrie einer Schraubenkopfbuchse drehfest einzugreifen. Durch den kegelförmig zulaufenden inneren Abschnitt des Schraubenkopfantriebs wird eine Führung bereitgestellt, wodurch verhindert wird, dass die Angriffsgeometrie des Schraubenkopfantriebs schräg in eine Eingriffsgeometrie einer Schraubenkopfbuchse eingeführt wird.

Vorzugsweise umfasst der der innere Abschnitt des erfindungsgemäßen Schraubenkopfantriebs einen gegenüber einem Zylindermantel im Bereich von 2,5° bis 10° geneigten Kegelstumpfmantel. Hierdurch wird der Vorteil erreicht, dass ein schräg aufgesetzter Schraubenkopfantrieb ohne großen Kraftaufwand zentriert ausgerichtet wird.

Des Weiteren umfasst der erfindungsgemäße Schraubenkopfantrieb einen zwischen dem äußeren Abschnitt und dem inneren Abschnitt angeordneten Einführbereich mit Einführflächen, wobei die Einführflächen eine Neigung von im Wesentlichen 10° gegenüber einer Grundfläche des Kegelstumpfs des inneren Abschnitts aufweisen. Hierdurch wird ein Hineingleiten der Angriffsgeometrie des Schraubenkopfantriebs in die Eingriffsgeometrie der Schraubenkopfbuchse erleichtert.

Die Angriffsgeometrie des erfindungsgemäßen Schraubenkopfantriebs ist vorzugsweise eine Philipps-Geometrie, eine Torx-Geometrie oder eine Schlitz-Geometrie. Besonders bevorzugt ist die Angriffsgeometrie eine den Schraubenkopfantrieb in einer normal auf die Höhe des Schraubenkopfantriebs orientierten, von der ersten Achse verschiedenen zweiten Achse durchlaufende Schlitz-Geometrie. Hierdurch wird der Vorteil erreicht, dass eine Vielzahl unterschiedlicher Schraubenantriebsgeometrien im Rahmen der Erfindung eingesetzt werden können.

Das erfindungsgemäße Ausformungswerkzeug zur Ausformung einer Schraubenkopfbuchse in einem Schraubenkopf umfasst einen äußeren Abschnitt und einen auf den äußeren Abschnitt folgenden inneren Abschnitt, wobei der innere Abschnitt in zumindest einer normal auf eine Höhe des Ausformungswerkzeugs orientierten ersten Achse einen größeren Durchmesser als der äußere Abschnitt aufweist. Der innere Abschnitt ist im Wesentlichen als ein in Richtung des äußeren Abschnitts zulaufender Kegelstumpf ausgebildet, und der äußere Abschnitt umfasst eine Angriffsgeometrie, welche dazu ausgebildet ist, in dem Schraubenkopf eine Eingriffsgeometrie zur drehfesten Aufnahme eines Schraubenkopfantriebs auszuformen. Hierdurch wird der Vorteil erreicht, dass eine erfindungsgemäße Schraubenkopfbuchse in einem Schraubenrohling ausgeformt werden kann.

Der innere Abschnitt des erfindungsgemäßen Ausformungswerkzeugs umfasst vorzugsweise einen gegenüber einem Zylindermantel im Bereich von 2,5° bis 10° geneigten Kegelstumpfmantel. Gemäß einer bevorzugten Ausführungsform des erfindungsgemäßen Ausformungswerkzeugs umfasst dieses zudem einen zwischen dem äußeren Abschnitt und dem inneren Abschnitt angeordneten Einführbereich mit Einführflächen, wobei die Einführflächen eine Neigung von im Wesentlichen 10° gegenüber einer Grundfläche des Kegelstumpfs des inneren Abschnitts aufweisen. Hierdurch wird eine einfache Einführung und Zentrierung eines Schraubenkopfantriebs in einer Schraubenkopfbuchse erreicht.

Vorzugsweise ist die Angriffsgeometrie des erfindungsgemäßen Ausformungswerkzeugs eine Philipps-Geometrie, eine Torx-Geometrie oder eine Schlitz-Geometrie. Besonders bevorzugt ist die Angriffsgeometrie eine das Ausformungswerkzeug in einer normal auf die Höhe des Ausformungswerkzeugs orientierten, von der ersten Achse verschiedenen zweiten Achse durchlaufende Schlitz-Geometrie. Hierdurch wird der Vorteil erreicht, dass eine Vielzahl unterschiedlicher Schraubenantriebsgeometrien im Rahmen der Erfindung eingesetzt werden können.

Die erfindungsgemäße Schraube umfasst eine erfindungsgemäße Schraubenkopfbuchse, welche vorzugsweise mit einem erfindungsgemäßen Ausformungswerkzeug ausgeformt wurde.

Das erfindungsgemäße Kit umfasst eine erfindungsgemäße Schraube und einen erfindungsgemäßen Schraubenkopfantrieb. Der innere Abschnitt des Schraubenkopfantriebs des erfindungsgemäßen Kits weist einen Kegelstumpfmantel mit einem gegenüber einem Zylindermantel größeren Neigungswinkel auf, als ein Kegelstumpfmantel des äußeren Abschnitts der Schraubenkopfbuchse der Schraube des erfindungsgemäßen Kits. Hierdurch wird ein Reibschluss zwischen der Schraubenkopfbuchse der Schraube und dem Schraubenkopfantrieb erreicht, wodurch eine Haltekraft bereitgestellt wird. Durch die Haltekraft verbleibt beziehungsweise steckt die Schraube auf dem Schraubenkopfantrieb fest, und kann leicht an einem Werkstück angesetzt werden. Beim Herausziehen des Schraubenkopfantriebs aus der Schraubenkopfbuchse wird diese Haltekraft leicht überwunden. Durch die erfindungsgemäße Ausgestaltung des Kits wird der Vorteil erreicht, dass eine auf die Schraube wirkende Haltekraft ohne zusätzliche, aus dem Stand der Technik bekannte magnetische Elemente bereitgestellt werden kann.
Figur 1a zeigt einen Querschnitt durch einen Schraubenkopf einer erfindungsgemäßen Schraube mit einer erfindungsgemäßen Schraubenkopfbuchse.
Figur 1b zeigt die Schraubenkopfbuchse gemäß Figur 1a in einer weiteren Querschnittsansicht.
Figur 1c zeigt die Schraubenkopfbuchse gemäß Figur 1a und Figur 1b in einer Ansicht von oben.
Figur 2a, Figur 2b und Figur 2c zeigen eine weitere Ausführungsvariante der erfindungsgemäßen Schraubenkopfbuchse mit einer Eingriffsgeometrie in Form einer Phillips-Geometrie.Figur 3a, Figur 3b, und Figur 3c zeigen eine weitere Ausführungsvariante der erfindungsgemäßen Schraubenkopfbuchse mit einer Eingriffsgeometrie in Form einer Schlitz-Geometrie.
Figur 4a zeigt einen erfindungsgemäßen Schraubenkopfantrieb in einer Seitenansicht.
Figur 4b zeigt den Schraubenkopfantrieb gemäß Figur 4a in einer perspektivischen Darstellung.
Figur 4c zeigt den Schraubenkopfantrieb gemäß Figur 4a und Figur 4b in einer Ansicht von oben.
Figur 5a, Figur 5b und Figur 5c zeigen eine weitere Ausführungsvariante des erfindungsgemäßen Schraubenkopfantriebs mit einer Angriffsgeometrie in Form einer Phillips-Geometrie.
Figur 6a, Figur 6b, und Figur 6c zeigen eine weitere Ausführungsvariante des erfindungsgemäßen Schraubenkopfantriebs mit einer Angriffsgeometrie in Form einer Schlitz-Geometrie.
Die Figuren 7a und 7b zeigen ein erfindungsgemäßes Ausformungswerkzeug mit einer Angriffsgeometrie in Form einer Torx-Geometrie.
Die Figuren 8a und 8b zeigen das erfindungsgemäße Ausformungswerkzeug mit einer Angriffsgeometrie in Form einer Phillips-Geometrie
Die Figuren 9a und 9b zeigen das erfindungsgemäße Ausformungswerkzeug mit einer Angriffsgeometrie in Form einer Schlitz-Geometrie.
Figur 10a und Figur 10b zeigen eine erste Ausführungsvariante der erfindungsgemäßen Schraube.
Figur 11a und Figur 11b zeigen eine zweite Ausführungsvariante der erfindungsgemäßen Schraube 1
Figur 12a und Figur 12b zeigen eine dritte Ausführungsvariante der erfindungsgemäßen Schraube 1

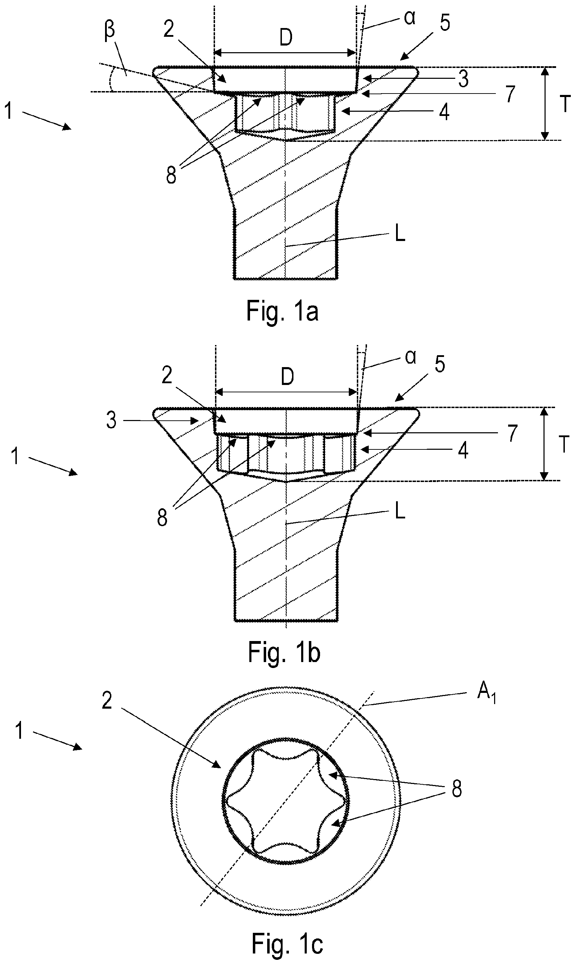

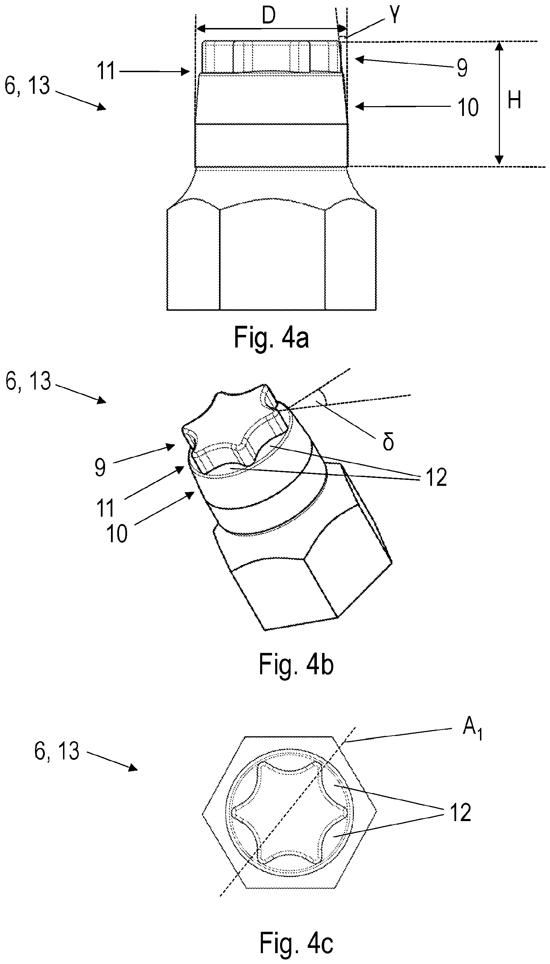

Figur 1a zeigt einen Schraubenkopf einer erfindungsgemäßen Schraube 1 im Querschnitt, zur Darstellung einer in der erfindungsgemäßen Schraube 1 vorgesehenen erfindungsgemäßen Schraubenkopfbuchse 2. Die erfindungsgemäße Schraubenkopfbuchse 2 weist einen äußeren Abschnitt 3 und einen inneren Abschnitt 4 auf, welcher auf den äußeren Abschnitt 3 folgt. Der äußere Abschnitt 3 beginnt an einer Deckfläche 5 des Schraubenkopfs, wobei zum Eindrehen der Schraube 1 ein erfindungsgemäßer Schraubenkopfantrieb 6, welcher in den Figuren 4a bis 4c dargestellt ist, durch den äußeren Abschnitt 3 in den inneren Abschnitt 4 eingeführt wird.

Der äußere Abschnitt 3 weist in zumindest einer normal auf eine Tiefe T der Schraubenkopfbuchse 2 orientierten, in Figur 1c ersichtlichen, ersten Achse A₁ einen größeren Durchmesser D als der innere Abschnitt 4 auf. Hierdurch wird das Einführen des Schraubenkopfantriebs 6 in die Schraubenkopfbuchse 2 erleichtert. Der äußere Abschnitt 3 weist im Wesentlichen die Form eines, in Richtung des inneren Abschnitts 4 zulaufenden Kegelstumpfs auf. Hierdurch wird eine Führung für den Schraubenkopfantrieb 6 bereitgestellt. Der innere Abschnitt 4 ist als Eingriffsgeometrie zur drehfesten Aufnahme des Schraubenkopfantriebs 6 ausgebildet. Als Eingriffsgeometrie kann im Rahmen der Erfindung jede aus dem Stand der Technik bekannte Geometrie für Schraubenantriebe vorgesehen sein. Insbesondere ist als Eingriffsgeometrie eine Philipps-Geometrie, eine Torx-Geometrie oder eine Schlitz-Geometrie bevorzugt. In den Figuren 1 bis 1c ist eine Torx-Geometrie dargestellt. Die erfindungsgemäße Konfiguration des äußeren Abschnitts 3 und des inneren Abschnitts 4 stellt eine verbesserte Führung des Schraubenkopfantriebs 6 beim Einführen in die Schraubenkopfbuchse 2 und eine Zentrierung des Schraubenkopfantriebs 6 in der Schraubenkopfbuchse 2 bereit, bevor dieser vollständig in die Eingriffsgeometrie eingreift. Hierdurch wird ein Abnutzen der Eingriffsgeometrie durch unsachgemäß eingesetzte Schraubenkopfantriebe 6 verhindert. Figur 1b zeigt den Schraubenkopf der Schraube 1 mit der Schraubenkopfbuchse 2 gemäß Figur 1a in einer weiteren Querschnittsdarstellung, welche gegenüber Figur 1a um eine Längsachse L des Schraubenkopfantriebs 2 rotiert ist. Die in den Figuren 1a bis 1c dargestellte Eingriffsgeometrie ist eine Torxgeometrie, wobei in Figur 1a ein maximaler Durchmesser der Torxgeometrie ersichtlich ist. Figur 1c zeigt den Schraubenkopf gemäß Figur 1a und 1b von oben, wobei die Eingriffsgeometrie in Draufsicht erkenntlich ist.

Der äußere Abschnitt 3 der erfindungsgemäßen Schraubenkopfbuchse weist vorzugsweise einen gegenüber einem Zylindermantel im Bereich von 2,5° bis 10° geneigten Kegelstumpfmantel auf. Die Neigung des Kegelstumpfmantels ist in den Figuren 1a und 1b mit dem Winkel α gekennzeichnet. Dieser Winkelbereich hat sich als besonders vorteilhaft in Bezug auf eine leichte Einführbarkeit des Schraubenkopfantriebs 6 erwiesen.

Vorzugsweise umfasst die Schraubenkopfbuchse 2 zudem einen zwischen dem äußeren Abschnitt 3 und dem inneren Abschnitt 4 angeordneten Einführbereich 7 mit Einführflächen 8. Diese sind in Figur 1a, 1b und 1c ersichtlich. Die Einführflächen 8 weisen gemäß der bevorzugten Ausführungsform der erfindungsgemäßen Schraubenkopfbuchse 2 eine in Figur 1a dargestellte Neigung β von im Wesentlichen 10° gegenüber einer Grundfläche des Kegelstumpfs des äußeren Abschnitts 3 auf. Hierdurch wird ein Hineingleiten einer Angriffsgeometrie des Schraubenkopfantriebs 6 in die Eingriffsgeometrie der Schraubenkopfbuchse 2 erleichtert.

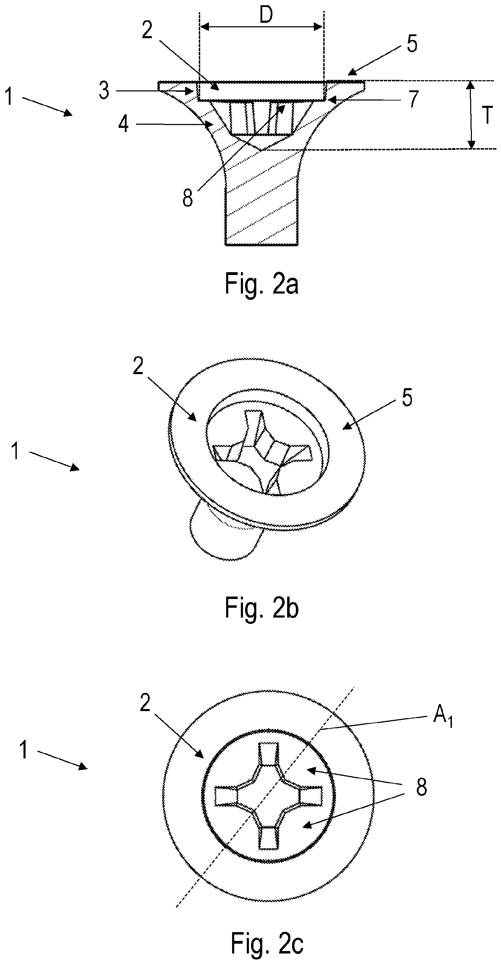

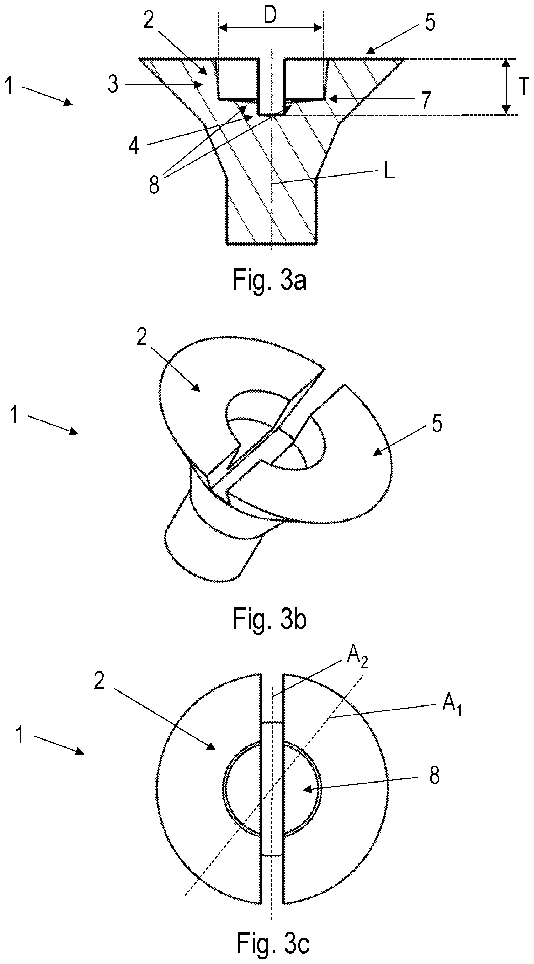

Die Figuren 2a, 2b und 2c zeigen eine alternative Ausführungsvariante der erfindungsgemäßen Schraubenkopfbuchse 2 mit einer Eingriffsgeometrie in Form einer Philipps-Geometrie, und die Figuren 3a, 3b, und 3c zeigen eine weitere Ausführungsvariante der erfindungsgemäßen Schraubenkopfbuchse 2 mit einer Eingriffsgeometrie in Form einer Schlitz-Geometrie.

Wie aus den Figur 3c ersichtlich kann die Eingriffsgeometrie eine die Schraubenkopfbuchse 2 in einer normal auf die Tiefe T der Schraubenkopfbuchse 2 orientierten, von der ersten Achse A₁ verschiedenen zweiten Achse A₂ durchlaufende Schlitz-Geometrie sein. Hierdurch wird der Vorteil erreicht, dass im Stand der Technik bekannte Schlitzschraubenzieher verwendet werden können um eine mit der erfindungsgemäßen Schraubenkopfbuchse 2 ausgestattete Schraube 1 anzutreiben.

Der erfindungsgemäße Schraubenkopfantrieb 6 ist in den Figuren 4a, 4b und 4c dargestellt. Der erfindungsgemäße Schraubenkopfantrieb 6 weist einen äußeren Abschnitt 9 und einen auf den äußeren Abschnitt 9 folgenden inneren Abschnitt 10 auf, wobei der innere Abschnitt 10 in zumindest einer, in Figur 4c ersichtlichen, normal auf eine Höhe H des Schraubenkopfantriebs 6 orientierten ersten Achse A₁ einen größeren Durchmesser D als der äußere Abschnitt 9 aufweist. Der innere Abschnitt 10 ist im Wesentlichen als ein in Richtung des äußeren Abschnitts 9 zulaufender Kegelstumpf ausgebildet. Der äußere Abschnitt 9 umfasst eine Angriffsgeometrie, welche dazu ausgebildet ist, in die Eingriffsgeometrie der erfindungsgemäßen Schraubenkopfbuchse 2 drehfest einzugreifen. Als Angriffsgeometrie kann im Rahmen der Erfindung jede aus dem Stand der Technik bekannte Geometrie für Schraubenantriebe vorgesehen sein. Diese ist in den Figuren 4b und 4c im Detail ersichtlich. In den Figuren 4a bis 4c ist eine Torx-Geometrie dargestellt. Insbesondere ist als Angriffsgeometrie eine Philipps-Geometrie, eine Torx-Geometrie oder eine Schlitz-Geometrie bevorzugt. Der Schraubenkopfantrieb 6 und die Schraubenkopfbuchse 2 stellen im Wesentlichen zueinander komplementäre geometrische Formen dar. Durch den kegelförmig zulaufenden inneren Abschnitt 10 des Schraubenkopfantriebs 6 wird im Zusammenspiel mit der kegelförmigen Ausgestaltung des äußeren Abschnitts 3 der Schraubenkopfbuchse 2 eine Führung bereitgestellt, wodurch verhindert wird, dass die Angriffsgeometrie des Schraubenkopfantriebs 6 schräg in eine Eingriffsgeometrie der Schraubenkopfbuchse 2 eingeführt wird. Hierdurch wird ein unsachgemäßes Einsetzen des Schraubenkopfantriebs 6 in die Schraubenkopfbuchse 2 verhindert und ein Durchdrehen des Schraubenkopfantriebs 6 in der Schraubenkopfbuchse 2 vermieden.

Der innere Abschnitt 10 des erfindungsgemäßen Schraubenkopfantriebs 6 umfasst einen gegenüber einem Zylindermantel im Bereich von 2,5° bis 10° geneigten Kegelstumpfmantel. Diese Neigung ist in Figur 4a mit dem Neigungswinkel γ gekennzeichnet. Dieser Winkelbereich hat sich als besonders vorteilhaft in Bezug auf eine leichte Einführbarkeit des Schraubenkopfantriebs 6 erwiesen.

Vorzugsweise umfasst der Schraubenkopfantrieb 6 einen zwischen dem äußeren Abschnitt 9 und dem inneren Abschnitt 10 angeordneten Einführbereich 11 mit Einführflächen 12. Diese Einführflächen 12 sind in Figur 4b und Figur 4c ersichtlich. Die Einführflächen 12 weisen vorzugsweise eine in Figur 4b ersichtliche Neigung δ von im Wesentlichen 10° gegenüber einer Grundfläche des Kegelstumpfs des inneren Abschnitts 10 auf. Hierdurch wird ein Hineingleiten der Angriffsgeometrie des Schraubenkopfantriebs 6 in die Eingriffsgeometrie der Schraubenkopfbuchse 2 erleichtert.

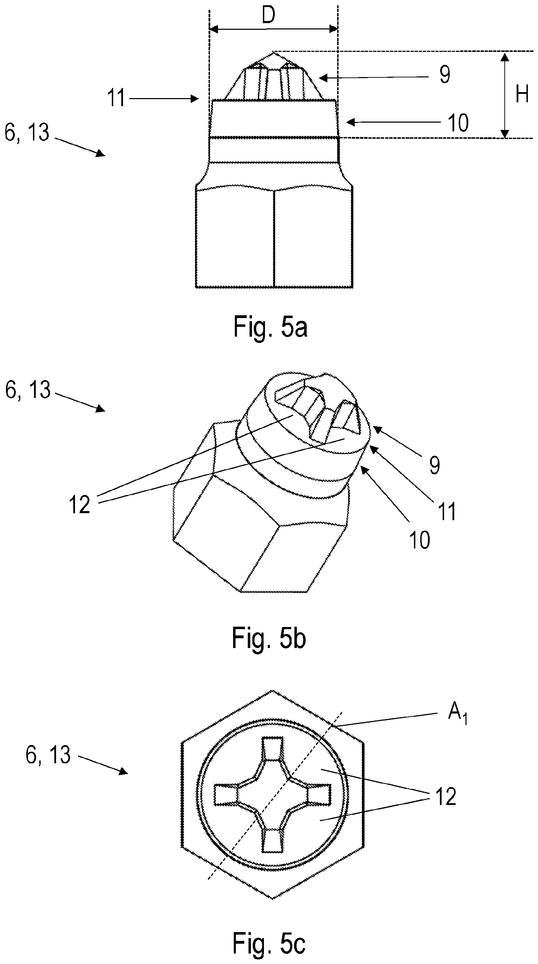

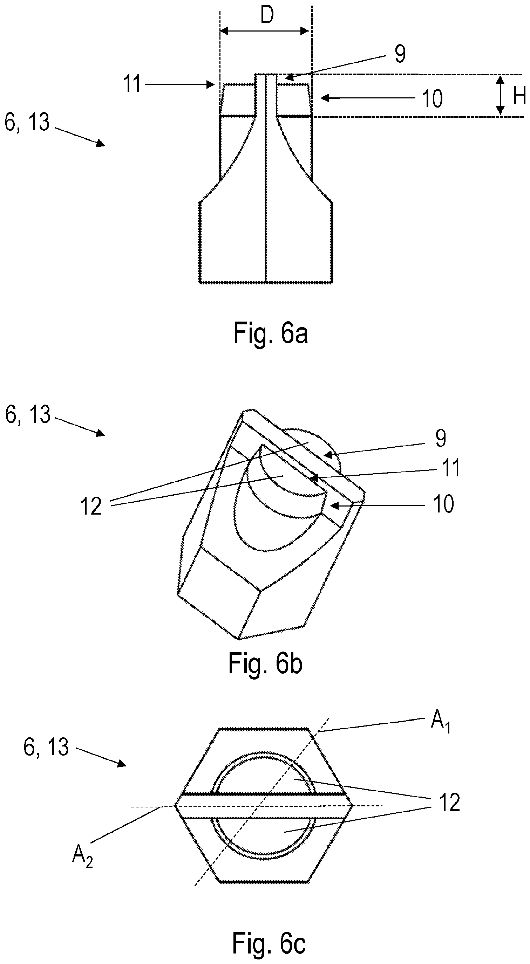

Die Figuren 5a, 5b und 5c zeigen eine alternative Ausführungsvariante des erfindungsgemäßen Schraubenkopfantriebs 6 mit einer Angriffsgeometrie in Form einer Philipps-Geometrie, und die Figuren 6a, 6b und 6c zeigen eine weitere Ausführungsvariante des erfindungsgemäßen Schraubenkopfantriebs 6 mit einer Angriffsgeometrie in Form einer Schlitz-Geometrie.

Wie aus den Figur 6c ersichtlich kann die Angriffsgeometrie eine den Schraubenkopfantrieb 6 in einer normal auf die Höhe H des Schraubenkopfantriebs 6 orientierten, von der ersten Achse A₁ verschiedenen zweiten Achse A₂ durchlaufende Schlitz-Geometrie sein.

Ein erfindungsgemäßes Ausformungswerkzeug 13 zur Ausformung einer Schraubenkopfbuchse 2 in einem Schraubenkopf wird in der Schraubenproduktion verwendet, um in einem Schraubenkopf eines Schraubenrohlings die erfindungsgemäße Schraubenkopfbuchse 2 auszuformen. Dieses Ausformungswerkzeug 13 weist im Wesentlichen dieselbe Geometrie auf wie der erfindungsgemäße Schraubenkopfantrieb 6. Das Ausformungswerkzeug 13 und die Schraubenkopfbuchse 2 stellen somit im Wesentlichen zueinander komplementäre geometrische Formen dar. Die Figuren 4a, 4b und 4c, 5a, 5b und 5c, sowie 6a, 6b und 6c zeigen somit auch beispielhaft einen oberen Abschnitt des erfindungsgemäßen Ausformungswerkzeugs 13.

Das Ausformungswerkzeug 13 zur Ausformung der Schraubenkopfbuchse 2 in einem Schraubenkopf umfasst wie der Schraubenkopfantrieb 6 einen äußeren Abschnitt 9 und einen auf den äußeren Abschnitt 9 folgenden inneren Abschnitt 10, wobei der innere Abschnitt 10 in zumindest einer normal auf eine Höhe H des Ausformungswerkzeugs 13 orientierten ersten Achse A₁ einen größeren Durchmesser D als der äußere Abschnitt 9 aufweist. Der innere Abschnitt 10 ist im Wesentlichen als ein in Richtung des äußeren Abschnitts 9 zulaufender Kegelstumpf ausgebildet, und der äußere Abschnitt 9 umfasst eine Angriffsgeometrie, welche dazu ausgebildet ist, in dem Schraubenkopf eine Eingriffsgeometrie zur drehfesten Aufnahme des Schraubenkopfantriebs 6 auszuformen. Als Angriffsgeometrie beziehungsweise Eingriffsgeometrie kann im Rahmen der Erfindung jede aus dem Stand der Technik bekannte Geometrie für Schraubenantriebe vorgesehen sein.

Der innere Abschnitt 10 des Ausformungswerkzeugs 13 umfasst vorzugsweise einen gegenüber einem Zylindermantel im Bereich von 2,5° bis 10° geneigten Kegelstumpfmantel. Diese Neigung ist in Figur 4a mit dem Neigungswinkel γ gekennzeichnet. Dieser Winkelbereich hat sich als besonders vorteilhaft in Bezug auf eine leichte Einführbarkeit des Schraubenkopfantriebs 6 erwiesen.

Gemäß der bevorzugten Ausführungsform des erfindungsgemäßen Ausformungswerkzeugs 13 umfasst dieses einen zwischen dem äußeren Abschnitt 9 und dem inneren Abschnitt 10 angeordneten, Einführbereich 11 mit Einführflächen 12. Die Einführflächen 12 weisen vorzugsweise eine in Figur 4b ersichtliche Neigung δ von im Wesentlichen 10° gegenüber einer Grundfläche des Kegelstumpfs des inneren Abschnitts 10 auf. Hierdurch wird ein Hineingleiten der Angriffsgeometrie des Schraubenkopfantriebs 6 in die Eingriffsgeometrie der Schraubenkopfbuchse 2 erleichtert.

Die Figuren 5a, 5b und 5c zeigen eine alternative Ausführungsvariante des erfindungsgemäßen Ausformungswerkzeugs 13 mit einer Angriffsgeometrie in Form einer Philipps-Geometrie, und die Figuren 6a, 6b und 6c zeigen eine weitere Ausführungsvariante des erfindungsgemäßen Ausformungswerkzeugs 13 mit einer Angriffsgeometrie in Form einer Schlitz-Geometrie.

Wie aus den Figur 6c ersichtlich kann die Angriffsgeometrie eine das Ausformungswerkzeug 13 in einer normal auf die Höhe H des Schraubenkopfantriebs 6 orientierten, von der ersten Achse A₁ verschiedenen zweiten Achse A₂ durchlaufende Schlitz-Geometrie sein.

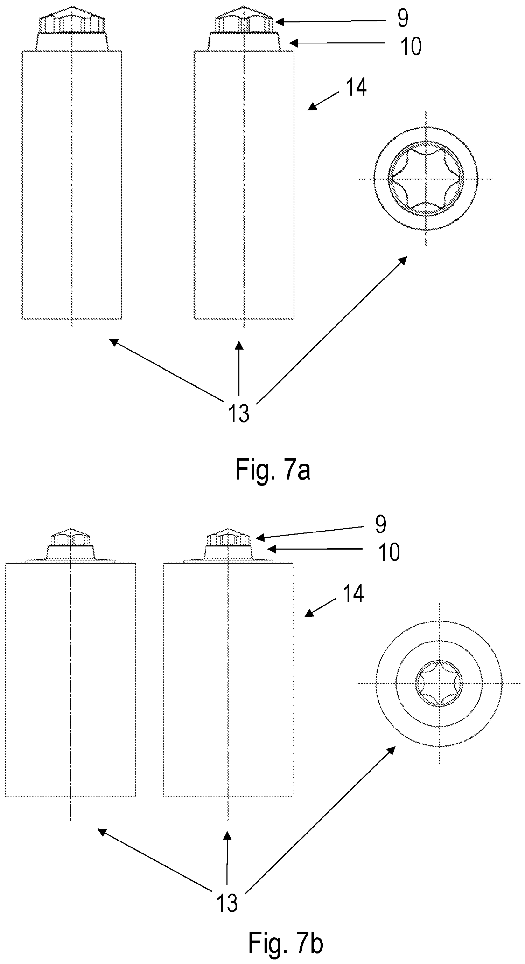

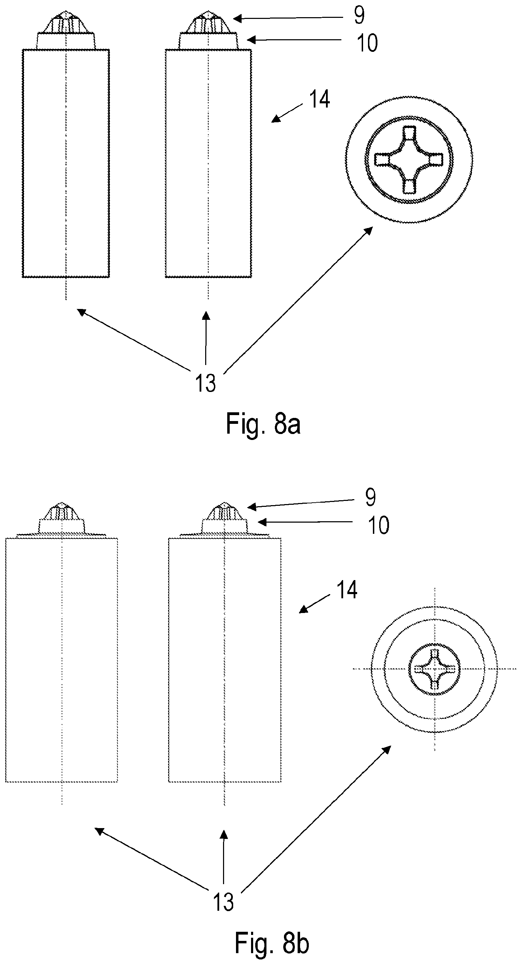

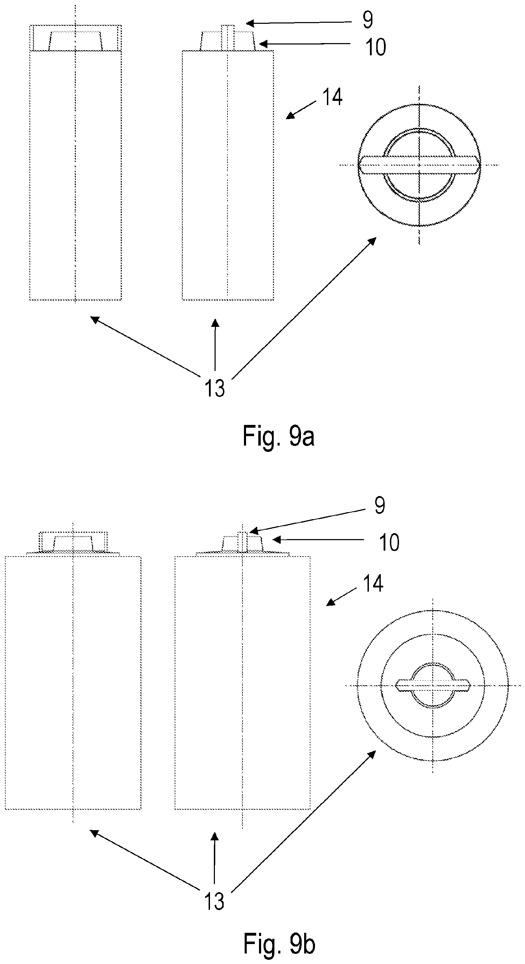

Die Figuren 7a bis 9b zeigen das erfindungsgemäße Ausformungswerkzeug 13 in im Wesentlichen vollständigen Darstellungen, wobei das Ausformungswerkzeug 13 einen Abschnitt 14 zum Befestigen des Ausformungswerkzeugs 13 in einer Schraubenproduktionsvorrichtung umfasst. Die Figuren 7a und 7b zeigen das erfindungsgemäße Ausformungswerkzeug 13 mit einer Angriffsgeometrie in Form einer Torx-Geometrie, in zwei unterschiedlichen Größen. Die Figuren 8a und 8b zeigen das erfindungsgemäße Ausformungswerkzeug 13 mit einer Angriffsgeometrie in Form einer Phillips-Geometrie, in zwei unterschiedlichen Größen, und die Figuren 9a und 9b zeigen das erfindungsgemäße Ausformungswerkzeug 13 mit einer Angriffsgeometrie in Form einer Schlitz-Geometrie in zwei unterschiedlichen Größen.

Ein erfindungsgemäßes Kit umfasst eine erfindungsgemäße Schraube 1 und einen erfindungsgemäßen Schraubenkopfantrieb 6. Der innere Abschnitt 10 des Schraubenkopfantriebs 6 des erfindungsgemäßen Kits weist einen Kegelstumpfmantel mit einem gegenüber einem Zylindermantel größeren Neigungswinkel γ auf als ein Kegelstumpfmantel des äußeren Abschnitts 3 der Schraubenkopfbuchse 2 der erfindungsgemäßen Schraube 1. Hierdurch wird beim Einstecken des Schraubenkopfantriebs 6 in die Schraubenkopfbuchse 2 der Schraube 1 ein Formschluss zwischen den Kegelstumpfmänteln der Schraubenkopfbuchse 2 und des Schraubenkopfantriebs 6 erreicht, und die Schraube 1 steckt auf dem Schraubenkopfantrieb 6 fest. Dies bietet den Vorteil, dass die Schraube 1 einfach, ohne sie zu halten, an einem Werkstück angesetzt und eingedreht werden kann. Zudem müssen hierdurch keine Magnetelemente in dem Schraubenkopfantrieb 6 vorgesehen werden. Versuche haben gezeigt, dass die derzeit am Markt befindlichen Schraubenkopfantriebe in der Regel überdimensioniert ausgeführt sind. Beispielsweise kann ein aus dem Stand der Technik bekannter TX25 Antrieb bei einer Holzschraube von 4 mm Durchmesser den vielfachen Wert des Bruchdrehmomentes der Schraube übertragen, da der Antrieb eine relativ große Tiefe aufweist. Diese Erkenntnis wird im Rahmen der Erfindung genutzt, da daraus folgt, dass nicht die ganze Tiefe des Antriebes benötigt wird, um eine Schraube einzudrehen. Somit wird erfindungsgemäß ein Teil der Tiefe für einen selbsthaftenden Formschluss verwendet, um die Schraube 1 am Schraubenkopfantrieb 6 zu halten. Über die unterschiedlichen Winkel α und γ der beiden Kegelstumpfmäntel von Schraubenkopfantrieb 6 und Schraubenkopfbuchse 2, wie beispielsweise 5° an der Schraubenkopfbuchse 2 und 10° an dem Schraubenkopfantrieb 6, kommt es hier zu einem sehr effektiven Formschluss, welcher die Schraube 1 am Schraubenkopfantrieb 6 hält. Dieser erfinderische Effekt kann an jeglicher Form von Schraubenantriebsgeometrie verwendet werden. Ein weiter Vorteil besteht in der sauberen Führung in axialer Richtung des Schraubenkopfantriebs 6. Hierdurch wird ein schräges oder schiefes Ansetzen des Schraubenkopfantriebs 6 auf der Schraube 1 verunmöglicht, wodurch ein unerwünschtes Ausreiben der Schraubenkopfbuchse 2 und/oder ein übermäßiges Abnutzen des Schraubenkopfantriebs 6 minimiert oder sogar gänzlich verhindert wird.

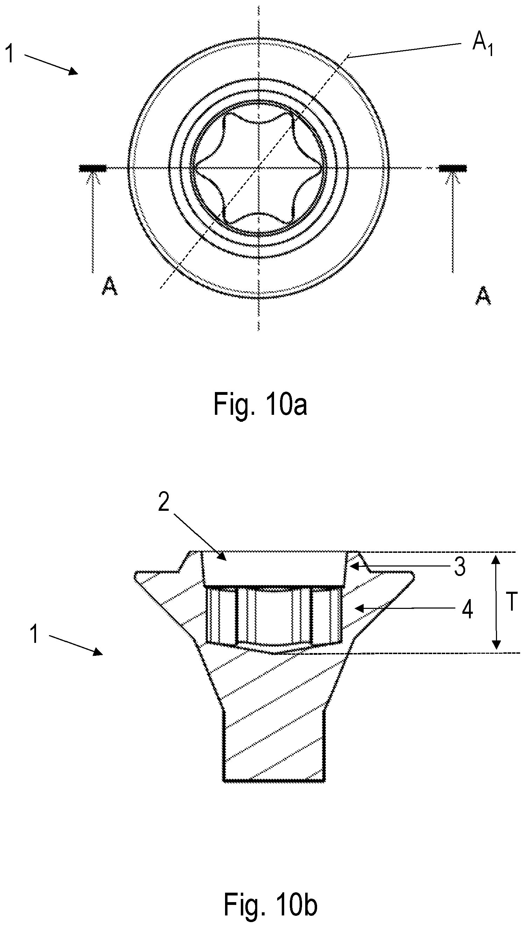

Figur 10a und Figur 10b zeigen eine erste Ausführungsvariante der erfindungsgemäßen Schraube 1. Figur 10a zeigt die Schraube 1 in einer Draufsicht und Figur 10b zeigt eine Schnittansicht der Schaube aus Figur 10a entlang der Linie A-A. Die Schraube 1 weist in dieser Ausführungsvariante einen, den äußeren Abschnitt 3 der Schraubenkopfbuchse 2 im Wesentlichen ringförmig umlaufenden, im Wesentlichen in Längsachsenrichtung der Schraube 1 verlaufenden Vorsprung 15 auf. Der Vorsprung 15 weist vorzugsweise eine Höhe von 0,75mm auf. Der Vorsprung 15 bietet den Vorteil, dass dieser eine zusätzliche Tiefe T der Schraubenkopfbuchse 2 bereitstellt, wodurch der äußere Abschnitt 3 zumindest teilweise innerhalb des Vorsprungs 15 verlaufen kann. Hierdurch kann eine Tiefe des inneren Abschnitts 4 vergrößert werden, wodurch eine größere, kraftübertragende Kontaktfläche zwischen der Eingriffsgeometrie der Schraubenkopfbuchse 2 und der Angriffsgeometrie des Schraubenkopfantriebs 6 erreicht wird.

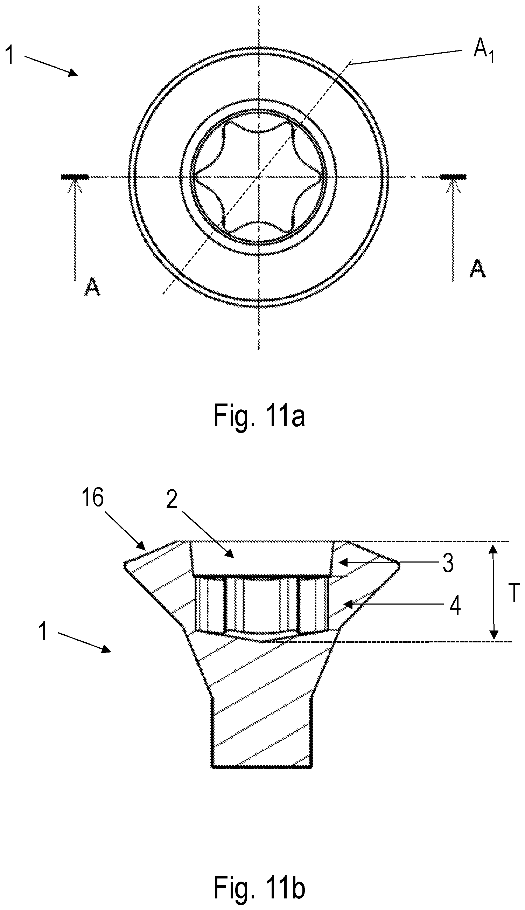

Figur 11a und Figur 11b zeigen eine zweite Ausführungsvariante der erfindungsgemäßen Schraube 1, in welcher die Schraube 1 eine, den äußeren Abschnitt 3 der Schraubenkopfbuchse 2 im Wesentlichen ringförmig umlaufende, in Radialrichtung der Schraube 2 nach außen abfallende Deckfläche 16 aufweist. Die Deckfläche 16 fällt vorzugsweise über eine Höhe von 0,75mm ab. Figur 11a zeigt die Schraube 1 in einer Draufsicht und Figur 11b zeigt eine Schnittansicht der Schaube aus Figur 11a entlang der Linie A-A. Durch die Form der Deckfläche 16 wird ebenfalls wie in der ersten erste Ausführungsvariante der erfindungsgemäßen Schraube 1 der technische Effekt erreicht, dass eine zusätzliche Tiefe T der Schraubenkopfbuchse 2 bereitgestellt wird.

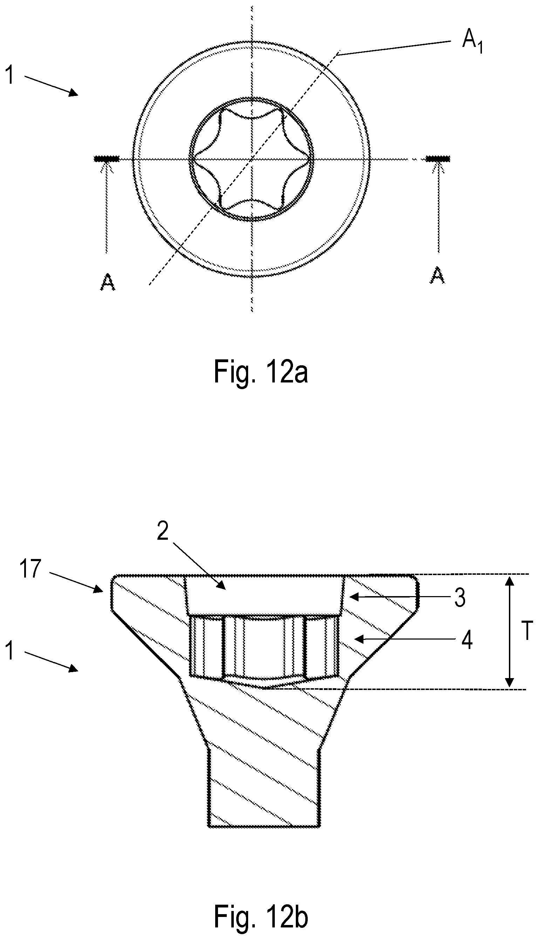

Figur 12a und Figur 12b zeigen eine dritte Ausführungsvariante der erfindungsgemäßen Schraube 1. Figur 12a zeigt die Schraube 1 in einer Draufsicht und Figur 12b zeigt eine Schnittansicht der Schaube aus Figur 12a entlang der Linie A-A. Gemäß dieser Ausführungsvariante weist die Schraube 1 eine, in Längsachsenrichtung der Schraube 1 verlaufende, und den äußeren Abschnitt 3 der Schraubenkopfbuchse 2 im Wesentlichen vollständig umlaufende Außenfläche 17 auf. Die Außenfläche 17 weist vorzugsweise eine Höhe von 1,31mm auf. Die Außenfläche 17 stellt ebenfalls eine zusätzliche Tiefe T der Schraubenkopfbuchse 2, sowie eine zusätzliche mechanische Stabilität der äußeren Abschnitts 3 bereit.

Ein aus dem Stand der Technik bekannter TX25 Antrieb verfügt über eine Tiefe T der Schraubenkopfbuchse im Bereich von 1,9mm - 2,3mm. Diese Tiefen T werden üblicherweise bei einem Durchmesser der Schraubenkopfbuchse im Bereich von 5mm, und bei einem Kopfdurchmesser von 9,5mm - 10mm erreicht. Die Höhe des Schraubenkopfes beträgt hierbei 4,8mm - 5,2mm.

Die erfindungsgemäße Schraube 1 weist gemäß einer definierten Schraubengröße eine Höhe des Schraubenkopfes im Bereich von 5,75mm auf, wobei die Tiefe der Eingriffsgeometrie des inneren Abschnitts 4 vorzugsweise in etwa 1,95mm beträgt. Der Kopfdurchmesser der Schraube 1 beträgt hierbei in etwa 10mm. Bei anderen Schraubengrößen werden diese Werte deren Verhältnis entsprechend skaliert.

## Patentansprüche

1. Kit umfassend eine Schraube (1) mit einer Schraubenkopfbuchse (2), wobei die Schraubenkopfbuchse (2) einen äußeren Abschnitt (3) und einen auf den äußeren Abschnitt (3) folgenden inneren Abschnitt (4) aufweist, wobei der äußere Abschnitt (3) in zumindest einer normal auf eine Tiefe (T) der Schraubenkopfbuchse (2) orientierten ersten Achse (A₁) einen größeren Durchmesser (D) als der innere Abschnitt (4) aufweist, und der äußere Abschnitt (3) der Schraubenkopfbuchse (2) im Wesentlichen als ein in Richtung des inneren Abschnitts (4) der Schraubenkopfbuchse (2) zulaufender Kegelstumpf und der innere Abschnitt (4) der Schraubenkopfbuchse (2) als Eingriffsgeometrie zur drehfesten Aufnahme eines Schraubenkopfantriebs (6) ausgebildet ist, und das Kit zusätzlich den Schraubenkopfantrieb (6) mit einem äußeren Abschnitt (9) und einem auf den äußeren Abschnitt (9) folgenden inneren Abschnitt (10) umfasst, wobei der innere Abschnitt (10) des Schraubenkopfantriebs (6) in zumindest einer normal auf eine Höhe (H) des Schraubenkopfantriebs (6) orientierten ersten Achse (A₁) einen größeren Durchmesser (D) als der äußere Abschnitt (9) des Schraubenkopfantriebs (6) aufweist, und der innere Abschnitt (10) des Schraubenkopfantriebs (6) im Wesentlichen als ein in Richtung des äußeren Abschnitts (9) des Schraubenkopfantriebs (6) zulaufender Kegelstumpf ausgebildet ist, und der äußere Abschnitt (9) des Schraubenkopfantriebs (6) eine Angriffsgeometrie umfasst, welche dazu ausgebildet ist, in die Eingriffsgeometrie der Schraubenkopfbuchse (2) drehfest einzugreifen, **dadurch gekennzeichnet, dass** der innere Abschnitt (10) des Schraubenkopfantriebs (6) einen Kegelstumpfmantel mit einem gegenüber einem Zylindermantel größeren Neigungswinkel (y) aufweist als ein Kegelstumpfmantel des äußeren Abschnitts (3) der Schraubenkopfbuchse (2) der Schraube (1).

2. Kit gemäß Anspruch 1, **dadurch gekennzeichnet, dass** der äußere Abschnitt (3) der Schraubenkopfbuchse (2) einen gegenüber einem Zylindermantel im Winkelbereich von 2,5° bis 10° geneigten Kegelstumpfmantel umfasst.

3. Kit gemäß einem der Ansprüche 1 oder 2, **dadurch gekennzeichnet dass** die Schraubenkopfbuchse (2) einen zwischen dem äußeren Abschnitt (3) und dem inneren Abschnitt (4) angeordneten Einführbereich (11) mit Einführflächen (12) umfasst, wobei die Einführflächen (12) eine Neigung von im Wesentlichen 10° gegenüber einer Grundfläche des Kegelstumpfs des äußeren Abschnitts (3) aufweisen.

4. Kit gemäß einem der Ansprüche 1 bis 3, **dadurch gekennzeichnet dass** die Eingriffsgeometrie eine Philipps-Geometrie, eine Torx-Geometrie oder eine Schlitz-Geometrie ist.

5. Kit gemäß einem der Ansprüche 1 bis 3, **dadurch gekennzeichnet dass** die Eingriffsgeometrie eine die Schraubenkopfbuchse (2) in einer normal auf die Tiefe (T) der Schraubenkopfbuchse (2) orientierten, von der ersten Achse (A₁) verschiedenen zweiten Achse (A₂) durchlaufende Schlitz-Geometrie ist.

6. Kit gemäß einem der Ansprüche 1 bis 5, **dadurch gekennzeichnet dass** der innere Abschnitt (10) des Schraubenkopfantriebs (5) einen gegenüber einem Zylindermantel im Winkelbereich von 2,5° bis 10° geneigten Kegelstumpfmantel umfasst.

7. Kit gemäß einem der Ansprüche 1 bis 6, **dadurch gekennzeichnet dass** der Schraubenkopfantrieb (6) einen zwischen dem äußeren Abschnitt (9) und dem inneren Abschnitt (10) angeordneten Einführbereich (11) mit Einführflächen (12) umfasst, wobei die Einführflächen (11) eine Neigung von im Wesentlichen 10° gegenüber einer Grundfläche des Kegelstumpfs des inneren Abschnitts aufweisen.

8. Kit gemäß einem der Ansprüche 1 bis 7, **dadurch gekennzeichnet dass** die Angriffsgeometrie eine Philipps-Geometrie, eine Torx-Geometrie oder eine Schlitz-Geometrie ist.

9. Kit gemäß einem der Ansprüche 1 bis 8, **dadurch gekennzeichnet dass** die die Angriffsgeometrie eine den Schraubenkopfantrieb (6) in einer normal auf die Höhe (H) des Schraubenkopfantriebs (6) orientierten, von der ersten Achse (A₁) verschiedenen zweiten Achse (A₂) durchlaufende Schlitz-Geometrie ist.

10. Kit gemäß Anspruch 1, **dadurch gekennzeichnet, dass** die Schraube (1) einen, den äußeren Abschnitt (3) der Schraubenkopfbuchse (2) im Wesentlichen ringförmig umlaufenden, im Wesentlichen in Längsachsenrichtung der Schraube (1) verlaufenden Vorsprung (15) aufweist.

11. Kit gemäß Anspruch 1, **dadurch gekennzeichnet, dass** die Schraube (1) eine, den äußeren Abschnitt (3) der Schraubenkopfbuchse (2) im Wesentlichen ringförmig umlaufende, in Radialrichtung der Schraube (2) nach außen abfallende Deckfläche (16) aufweist.

12. Kit gemäß Anspruch 1, **dadurch gekennzeichnet, dass** die Schraube (1) eine, in Längsachsenrichtung der Schraube (1) verlaufende, und den äußeren Abschnitt (3) der Schraubenkopfbuchse (2) im Wesentlichen vollständig umlaufende Außenfläche (17) aufweist.

## Claims

1. A kit comprising a screw (1) with a screw head bush (2), wherein the screw head bush (2) has an external portion (3) and an internal portion (4) following the external portion (3), wherein the external portion (3) has a larger diameter (D) than the internal portion (4) at least in a first axis (A₁) oriented perpendicular to a depth (T) of the screw head bush (2), and the external portion (3) of the screw head bush (2) is configured essentially as a truncated cone tapering towards the internal portion (4) of the screw head bush (2) and the internal portion (4) is configured as engagement geometry for the rotationally fixed accommodation of a screw head drive (6), and wherein the kit further comprises the screw head drive (6), having an external portion (9) and an internal portion (10) following the external portion (9), wherein the internal portion (10) of the screw head drive (6) has a larger diameter (D) than the external portion (9) of the screw head drive (6) in at least a first axis (A₁) oriented perpendicular to a height (H) of the screw head drive (6), the internal portion (10) of the screw head drive (6) is configured essentially as a truncated cone tapering towards the external portion (9) of the screw head drive (6) and the external portion (9) of the screw head drive (6) comprises a contact geometry, which is configured to engage an engagement geometry of a screw head bush (2) in a rotationally fixed manner,
**characterized in that**
the internal portion (10) of the screw head drive (6) has a larger inclination angle (γ) than a truncated cone shell of the external portion (3) of the screw head bush (2) of the screw (1) in regard to a cylinder shell.

2. The kit according to claim 1, **characterized in that** the external portion (3) of the screw head bush (2) comprises a truncated cone shell inclined in regard to a cylinder shell in the angular range of 2.5° to 10°.

3. The kit according to any one of claims 1 or 2, **characterized in that** the screw head bush (2) comprises an insertion area (11) arranged between the external portion (3) and the internal portion (4) and having insertion surfaces (12), wherein the insertion surfaces (12) have an inclination of essentially 10° in regard to a base area of the truncated cone of the external portion (3).

4. The kit according to any one of claims 1 to 3, **characterized in that** the engagement geometry is a Philipps geometry, a Torx geometry or a slot geometry.

5. The kit according to any one of claims 1 to 3, **characterized in that** the engagement geometry is a slot geometry passing through the screw head bush (2) in a second axis (A₂) oriented perpendicular to the depth (T) of the screw head bush (2) and being different from the first axis (A₁).

6. The kit according to any one of claims 1 to 5, **characterized in that** the internal portion (10) of the screw head drive (5) comprises a truncated cone shell inclined in regard to a cylinder shell in the angular range of 2.5° to 10°.

7. The kit according to any one of claims 1 to 6, **characterized in that** the screw head drive (6) comprises an insertion area (11) arranged between the external portion (9) and the internal portion (10) and having insertion surfaces (12), wherein the insertion surfaces (11) have an inclination of essentially 10° in regard to a base area of the truncated cone of the internal portion.

8. The kit according to any one of claims 1 to 7, **characterized in that** the contact geometry is a Philipps geometry, a Torx geometry or a slot geometry.

9. The kit according to any one of claims 1 to 8, **characterized in that** the contact geometry is a slot geometry passing through the screw head drive (6) in a second axis (A₂) oriented perpendicular to the height (H) of the screw head drive (6) and being different from the first axis (A₁).

10. The kit according to claim 1, **characterized in that** the screw (1) has a protrusion (15) revolving ring-like around the external portion (3) of the screw head bush (2) and extending essentially in the direction of the longitudinal axis of the screw (1).

11. The kit according to claim 1, **characterized in that** the screw (1) has a cover surface (16) essentially revolving ring-like around the external portion (3) of the screw head bush (2) and declining outwards in the radial direction of the screw (2).

12. The kit according to claim 1, **characterized in that** the screw (1) has an external surface (17) extending in the longitudinal direction of the screw (1) and essentially completely revolving around the external portion (3) of the screw head bush (2).

## Revendications

1. Kit comprenant une vis (1) avec une empreinte de tête de vis (2), laquelle empreinte de tête de vis (2) présente une section extérieure (3) et une section intérieure (4) faisant suite à la section extérieure (3), la section extérieure (3) présentant un plus grand diamètre (D) que la section intérieure (4) dans au moins un premier axe (A₁) orienté perpendiculairement à une profondeur (T) de l'empreinte de tête de vis (2), la section extérieure (3) de l'empreinte de tête de vis (2) étant configurée sensiblement comme un tronc de cône s'effilant en direction de la section intérieure (4) de l'empreinte de tête de vis (2) et la section intérieure (4) de l'empreinte de tête de vis (2) présentant une géométrie de préhension pour la réception sans possibilité de rotation d'un entraînement de tête de vis (6), lequel kit comporte en outre l'entraînement de tête de vis (6) avec une section extérieure (9) et une section intérieure (10) faisant suite à la section extérieure (9), la section intérieure (10) de l'entraînement de tête de vis (6) présentant un plus grand diamètre (D) que la section extérieure (4) de l'entraînement de tête de vis (6) dans au moins un premier axe (A₁) orienté perpendiculairement à une hauteur (H) de l'entraînement de tête de vis (6) et la section intérieure (10) de l'entraînement de tête de vis (6) étant configurée sensiblement comme un tronc de cône s'effilant en direction de la section extérieure (9) de l'entraînement de tête de vis (6), et la section extérieure (9) de l'entraînement de tête de vis (6) présentant une géométrie d'attaque qui est configurée pour s'engager sans possibilité de rotation dans la géométrie de préhension de l'empreinte de tête de vis (2), **caractérisé en ce que** la section intérieure (10) de l'entraînement de tête de vis (6) comporte un manteau tronconique ayant un angle d'inclinaison (γ) par rapport à un manteau cylindrique plus grand qu'un manteau tronconique de la section extérieure (3) de l'empreinte de tête de vis (2) de la vis (1).

2. Kit selon la revendication 1, **caractérisé en ce que** la section extérieure (3) de l'empreinte de tête de vis (2) comporte un manteau tronconique incliné selon un angle de 2,5 à 10° par rapport à un manteau cylindrique.

3. Kit selon une des revendications 1 ou 2, **caractérisé en ce que** l'empreinte de tête de vis (2) comporte une zone d'insertion (11) dotée de surfaces d'insertion (12) disposée entre la section extérieure (3) et la section intérieure (4), les surfaces d'insertion (12) présentant une inclinaison d'environ 10° par rapport à la surface de base du tronc de cône de la section extérieure (3).

4. Kit selon une des revendications 1 à 3, **caractérisé en ce que** la géométrie de préhension est une géométrie Philips, une géométrie Torx ou une géométrie de fente.

5. Kit selon une des revendications 1 à 3, **caractérisé en ce que** la géométrie de préhension est une géométrie de fente traversant l'empreinte de tête de vis (2) dans un deuxième axe (A₂) différent du premier axe (A₁) et orienté perpendiculairement à la profondeur (T) de l'empreinte de tête de vis (2).

6. Kit selon une des revendications 1 à 5, **caractérisé en ce que** la section intérieure (10) de l'entraînement de tête de vis (5) comporte un manteau tronconique incliné selon un angle de 2,5 à 10° par rapport à un manteau cylindrique.

7. Kit selon une des revendications 1 à 6, **caractérisé en ce que** l'entraînement de tête de vis (6) comporte une zone d'insertion (11) dotée de surfaces d'insertion (12) disposée entre la section extérieure (9) et la section intérieure (10), les surfaces d'insertion (11) présentant une inclinaison d'environ 10° par rapport à une surface de base du tronc de cône de la section intérieure.

8. Kit selon une des revendications 1 à 7, **caractérisé en ce que** la géométrie d'attaque est une géométrie Philips, une géométrie Torx ou une géométrie de fente.

9. Kit selon une des revendications 1 à 8, **caractérisé en ce que** la géométrie d'attaque est une géométrie de fente traversant l'entraînement de tête de vis (6) dans un deuxième axe (A₂) différent du premier axe (A₁) et orientée perpendiculairement à la hauteur (H) de l'entraînement de tête de vis (6).

10. Kit selon la revendication 1, **caractérisé en ce que** la vis (1) comporte une saillie (15) entourant de façon sensiblement annulaire la section extérieure (3) de l'empreinte de tête de vis (2) et s'étendant sensiblement dans la direction de l'axe longitudinal de la vis (1).

11. Kit selon la revendication 1, **caractérisé en ce que** la vis (1) comporte une surface supérieure (16) entourant de façon sensiblement annulaire la section extérieure (3) de l'empreinte de tête de vis (2) et s'abaissant vers l'extérieur dans la direction radiale de la vis (2).

12. Kit selon la revendication 1, **caractérisé en ce que** la vis (1) comporte une surface extérieure (17) s'étendant dans la direction de l'axe longitudinal de la vis (1) et entourant de façon sensiblement complète la section extérieure (3) de l'empreinte de tête de vis (2).
